# EUROPEAN PATENT SPECIFICATION

(11) **EP 3 011 289 B1**
(45) Date of publication and mention of the grant of the patent: **28.10.2020**
(21) Application number: 14814573.3
(22) Date of filing: 16.06.2014
(51) Int. Cl.: G01J 11/00, G01J 3/02, G01S 3/783, F41G 5/04, F41H 11/02, F41G 3/14, G01S 7/48

(54) **THREAT WARNING SYSTEM INTEGRATING FLASH EVENT AND TRANSMITTED LASER DETECTION**
BEDROHUNGSWARNSYSTEM MIT FLASH-EREIGNISSEN UND ERKENNUNG ÜBERTRAGENER LASER
SYSTÈME D'AVERTISSEMENT EN CAS DE MENACE INTÉGRANT LA DÉTECTION D'UN ÉVÉNEMENT ÉCLAIR LUMINEUX ET D'UNE TRANSMISSION LASER

(30) Priority: 17.06.2013 IL 22699613
(43) Date of publication of application: 27.04.2016
(73) Proprietor: Elbit Systems Land and C4I Ltd., 4250705 Netanya (IL)
(72) Inventor: NESHER, Ofer, 30900 Zichron Ya'akov (IL); YANIV, Elad, 4053539 Even Yehuda (IL)
(74) Representative: Jaeger, Michael David
(86) International application number: PCT/IL2014/050541
(87) International publication number: WO 2014/203243

(56) References cited:
- WO-A1-2006/061819
- WO-A1-2012/093399
- WO-A1-2012/093399
- US-A- 5 430 448
- US-A1- 2012 217 301
- US-B1- 7 499 836
- US-B1- 7 499 836

## Description

### FIELD OF THE DISCLOSED TECHNIQUE

The disclosed technique generally relates to a warning system for threats against military targets, and more particularly, to laser-based threat detection and flash event threat detection.

### BACKGROUND OF THE DISCLOSED TECHNIQUE

Modern military combat technology involves a multitude of laser assisted weapon systems. Such systems include laser-guided weapons, in which a missile or other projectile is directed toward a target using a laser beam, as well as laser rangefinders for detecting the distance and direction of a potential target. Armored vehicles are particularly susceptible to laser assisted enemy attacks. Laser warning systems (LWS) are utilized by military forces to provide an immediate indication of laser radiation being directed against them, and to allow the swift implementation of an appropriate response to counteract the threat. Such systems include sensors that operate in a spectral window characteristic of laser-based transmissions, and which are capable of sampling at a sufficiently high rate, as the laser events generally last for only a few nanoseconds (ns). Laser warning systems may also measure and monitor various parameters associated with the transmitted laser radiation, such as the frequency or the angle of arrival, which may provide additional information that can subsequently be utilized to counteract the threat.

Certain weapon systems may also result in a flash or transient burst of light upon their deployment, such as the flash of light arising from the combustion triggering the launching of a missile or the firing of an artillery shell. For example, a missile launch tends to generate a plume and radiation emission which is generally on the order of tens of milliseconds (ms) in duration. Systems that provide an indication of such launch flashes also exist, and are sometimes known as missile warning systems (MWS). Such warning systems require dedicated sensors configured in accordance with the particular characteristics of these launch flashes, such as the capability to detect radiation matching a certain profile (e.g., short duration, spectral signature). The conventional approach for flash detection utilizes image sensor arrays. FLIR and UV based image sensors were initially predominant, followed by increased development of SWIR sensors. The detection of various parameters of the launching flash can also provide additional information associated with the launched threat.

An integrated warning system that provides both LWS and MWS capabilities would generally require at least two separate sets of radiation detectors, each responsible for detection of the respective type of radiation, as well as supplemental hardware and processing components associated with each one of these tasks. The required increased infrastructure serves to substantially increase the costs of such an integrated system and expand its complexity, in addition to the increased response time that would generally result. Considering the life-threatening circumstances in question, the need for extremely rapid detection and identification of an oncoming threat is of critical importance. Furthermore, the accuracy of the system is understandably a crucial factor. Ideally, the false alarm rate (FAR) of detected threats, i.e., incorrect detections of non-threats as valid threats, should be as low as possible. Errors and inaccuracies in threat warning system can result in substantially consumed time and resources at best, and may have fatal implications at worst.

U.S. Patent Application No. 2011/0127328 to Warren, entitled "Dual band threat warning system", is directed to methods and devices for both passively and actively detecting and tracking incoming threats such as rockets or missiles. The dual-band detection system includes an initial passive detector in a first band, and a selectively activated active detector in a second band. The passive detector may be an optical detector that detects a launch of a potential threat and establishes its location in an image plane. Upon detection, the optical detector may send detection and location information to a control processor, which then activates an active radar transmitter and directs the radar beam to the correct coordinates to intercept the threat. The radar may determine the speed, direction and range of the potential threat. If the threat is determined to be real then a countermeasure may be employed, while if the threat is determined to be false, the radar is deactivated and the system returns to a passive optical surveillance mode.

U.S. Patent Application No. 2011/0170798 to Tidhar, entitled "Gunshot detection system and method", is directed to the detection and location of high speed photon emitting events, such as firearms, gunshots, and muzzle flashes. A photo detector array senses electromagnetic radiation in the NIR and SWIR spectral ranges. Sequential pixel images are acquired at a high frame rate, and with a relatively wide field of view for a pixel or pixels of the photodetector. The images are processed to detect a flash-type signal portion in the detected light. For example, the processing may involve selecting for any pixel a signal portion indicative of muzzle flash type intensity variation over time. For another example, the processing involves estimating for any pixel a likelihood of occurrence of a muzzle flash event, such as by comparing a signal obtained from the pixel with the time signature of the muzzle flash.

An example of an integrated warning system is the AN/AAR-47 Missile Warning System (MWS) of ATK Integrated Systems, as identified in the following website: <http://www.globalsecurity.org/military/systems/aircraft/systems/an-aar-47.htm>.

The AN/AAR-47 MWS is an electronic warfare system designed to protect low/slow flying aircraft against surface-to-air and air-to-air missiles. The MWS will detect a missile fired at the aircraft or a laser pointed at the aircraft.

U.S. Patent No. 7,499,836 to Mooney, entitled "Apparatus for and methods of detecting combustion ignition", is directed to the detection and analysis of a dynamic combustion event, such as the flash from an explosion or the plume of a rocket, using a broadband imaging-sensor, such as a broadband focal plane array (FPA) which is typically based on indium antimonide (InSb) detector technology. The imaging-sensor is configured to spatially encode the spectral signature of the combustion event, encoding the event signal as a function of both wavelength and time. The encoded signal is evaluated to declare the presence of combustion where appropriate, and further processed to classify and identify the event. The sensor is configured to sample the event signature with a sufficiently high temporal resolution and sufficient spectral resolution to capture the event signature so that classification can be performed unambiguously.

PCT Application International Publication No. WO 2012/093399 to Elbit Systems Ltd., entitled "Laser threat warning system and method", is directed to a system for detecting laser radiation transmitted by a threat source, using multiple spatially separated laser detectors. The system includes filtering mechanisms for filtering noise and irrelevant detections, and threat identification mechanisms for identifying and characterizing an incoming laser-based threat. An adjustable threshold mechanism dynamically adjusts a noise threshold level of a laser detector, the threshold level adaptively selected in accordance with ambient light conditions. A correlation filtering mechanism determines if incoming laser radiation results from noise, based on the arrival times at the spatially separated laser detectors. A friendly fire avoidance mechanism filters detected laser radiation transmitted by a non-threat source, based on an indication signal from the non-threat source. A temporal mapping mechanism identifies and characterizes a threat, based on pulse mappings of the received laser radiation. A first arrival mechanism determines the threat direction based on where the incoming laser radiation arrived first, by analyzing detection timestamps of the laser detectors.

U.S. Patent Application No. 2012/0217301 to Namey et al, entitled "Method and system for countering an incoming threat", is directed to a hit avoidance system deployed on a combat vehicle. When a laser warning receiver (LWR) detects a targeting laser beam impinging on the combat vehicle, a multifunction countermeasure (MCM) is activated to deploy a soft kill countermeasure to jam or decoy the targeting system. When a passive threat warner (PTW) detects a muzzle flash indicative of an incoming projectile launch, the threat is then tracked using a radar and electro-optical infrared sensors, which calculate attitude, position and range data. The tracking data is analyzed to compute firing solutions for an active protection system (APS) and to determine which hard kill countermeasure to utilize. For example, armament rounds may be fired from a primary armament (e.g., turret gun) or a secondary armament of the combat vehicle, or an interceptor missile may be launched from the APS.

### SUMMARY OF THE DISCLOSED TECHNIQUE

In accordance with one aspect of the disclosed technique, there is thus provided a dual threat warning system for detecting a flash event of a threat source and for detecting a laser transmission of a threat source. The system includes at least one sensor module, operative to receive incoming radiation. The sensor module includes discrete sensors including at least one discrete impact recognition sensor, at least one discrete spectral sensor, at least one discrete frequency sensor, and at least one filter. The impact recognition sensor detects the presence of an incident laser pulse of the incoming radiation. The spectral sensor detects if the spectral range of the incoming radiation is above or below a specified setpoint. The frequency sensor detects if the frequency of the incoming radiation is above or below a specified setpoint. The filter filters the incoming radiation according to at least one filtering criteria. The system further includes a processor, coupled with the sensor module. The processor determines, using said discrete sensors, if the incoming radiation is resulting from a flash event comprising a light flash associated with the launching of a threat, and if the incoming radiation is resulting from an active laser transmission comprising a laser radiation transmitted by a threat source, based on spectral characteristics and temporal characteristics of the incoming radiation, whereby a flash event has a duration on the order of milliseconds, whereas an active laser transmissions has a duration on the order of nanoseconds, where the discrete sensors are configured to sample at a sampling rate capable of detection up to a nanosecond range, to enable both flash event detection and active laser transmission detection using said discrete sensors. The sensor module may further include azimuth angular sensors, for detecting the azimuth angle of arrival of the incoming radiation. The sensor module may further include elevation angular sensors, for detecting the elevation angle of arrival of the incoming radiation. The sensor module may further include power sensors, for detecting the intensity of the incoming radiation. The filter may include a wavelength filter, coupled with at least one impact recognition sensor, for filtering out selected wavelengths of the incoming radiation. The sensors may be arranged along a circular perimeter across an azimuthal plane of the sensor module to obtain 360° azimuth detection coverage. The impact recognition sensor may operate in an activated state during standby system mode and trigger the activation of at least a subset of the other sensors of the sensor module upon detection of the incoming radiation. The processor may further identify and characterize an incoming threat using the characteristics of the incoming radiation. At least one sensor may be a silicon (Si) sensor, an indium gallium arsenide (InGaAs) sensor, or an extended-lnGaAs sensor. At least one sensor may include multiple encoded masks with a gray code matrix pattern. The sensor module may be included in a sensor unit and the processor may be included in a control unit situated at a separate location from the sensor unit, where the control unit is wirelessly coupled with the sensor unit. At least a portion of the system may be installed on: a vehicle, an armored military vehicle, an aircraft, a marine vessel, a guard post, a mobile platform, and/or a stationary platform. The system may include different detection channels between flash event detections and active laser transmission detections for a given sensor, in that each sensor feeds data to different amplification circuitry that relate to different threat detection mechanisms.

In accordance with another aspect of the disclosed technique, there is thus provided a dual threat warning method for detecting a flash event of a threat source and for detecting a laser transmission of a threat source. The method includes the procedures of: receiving incoming radiation at at least one sensor module including discrete sensors, filtering the incoming radiation according to at least one filtering criteria, and detecting the filtered incoming radiation at at least one discrete impact recognition sensor of the sensor module. The method further includes the procedures of detecting if the spectral range of the incoming radiation is above or below a specified setpoint with at least one discrete spectral sensor of the sensor modules, and detecting if the frequency of the incoming radiation is above or below a specified setpoint with at least one discrete frequency sensor of the sensor modules. The method further includes the procedure of determining, using said discrete sensors, if the incoming radiation is resulting from a flashing event comprising a light flash associated with the launching of a threat, and if the incoming radiation is resulting from an active laser transmission comprising a laser radiation transmitted by a threat source, based on spectral characteristics and temporal characteristics of the incoming radiation whereby a flash event has a duration on the order of milliseconds, whereas an active laser transmissions has a duration on the order of nanoseconds, where the discrete sensors are configured to sample at a sampling rate capable of detection up to a nanosecond range, to enable both flash event detection and active laser transmission detection. The method may further include the procedure of triggering the activation of at least a subset of the other sensors of the sensor module upon detection of the incoming radiation. The method may further include the procedure of determining at least one other parameter of the incoming radiation including: azimuth angle of arrival with azimuth sensors, elevation angle of arrival with elevation sensors, and/or intensity with power sensors. The filtering criteria may include wavelength filtering.

The method may further include the procedure of identifying and characterizing an incoming threat using the characteristics of the incoming radiation. The incoming radiation may be routed through different detection channels between flash event detections and active laser transmission detections for a given sensor, in that each sensor feeds data to different amplification circuitry that relate to different threat detection mechanisms.

### BRIEF DESCRIPTION OF THE DRAWINGS

The disclosed technique will be understood and appreciated more fully from the following detailed description taken in conjunction with the drawings in which:
Figure 1 is a block diagram of a threat warning system, constructed and operative in accordance with an embodiment of the disclosed technique;
Figure 2A is a front view schematic illustration of an exemplary sensor unit configuration, constructed and operative in accordance with an embodiment of the disclosed technique;
Figure 2B is a perspective view schematic illustration of another exemplary sensor unit configuration, constructed and operative in accordance with another embodiment of the disclosed technique;
Figure 3 is a top view schematic illustration of the sensor unit of Figure 2A;
Figure 4 is a top view schematic illustration of an armored military vehicle installed with components of the threat warning system of Figure 1, constructed and operative in accordance with an embodiment of the disclosed technique; and
Figure 5 is a flow diagram of a method for detecting radiation associated with an incoming threat, operative in accordance with an embodiment of the disclosed technique.

### DETAILED DESCRIPTION OF THE EMBODIMENTS

The disclosed technique overcomes the disadvantages of the prior art by providing a threat warning system and method that utilizes multiple discrete sensors for detecting different parameters associated with incoming radiation and determining if the radiation is a light flash associated with the launching of an explosive projectile, or laser radiation transmitted by a weapon source. An incoming threat may be subsequently identified and characterized, allowing for the implementation of a suitable countermeasure.

The term "flash event", and any variations thereof, as used herein, refers to any type of light flash or sparks associated with the launching of a threat which involves some form of combustion that triggers the firing of an explosive projectile and which is generally transient in nature. Examples of flash events include, but are not limited to: the light flash resulting from the launching of a rocket, missile or torpedo; and the firing of an artillery projectile or ammunition via a mortar, cannon, gun or any other form of weaponry.

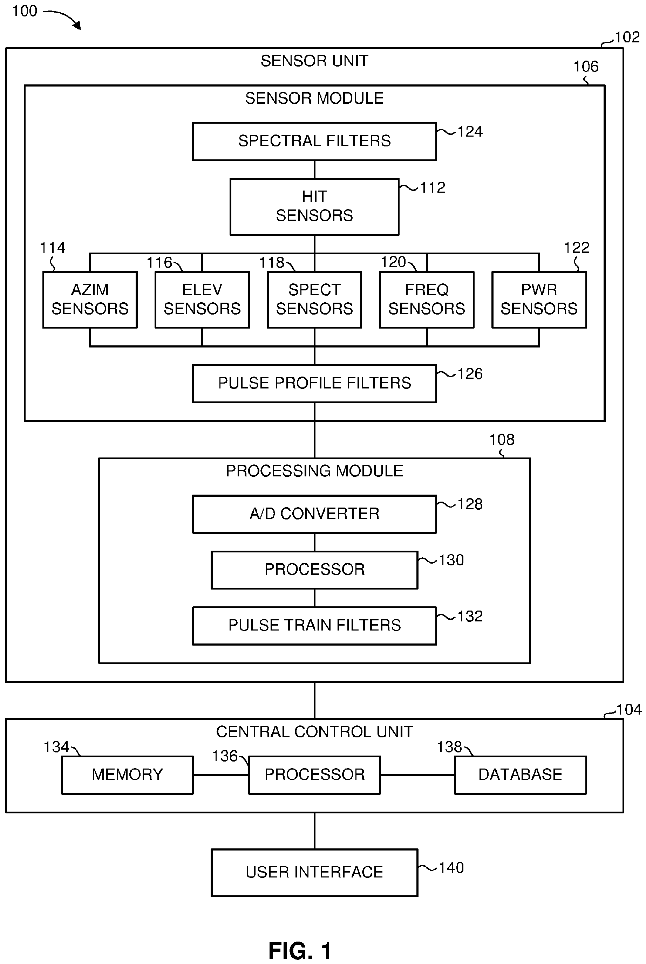

Reference is now made to Figure 1, which is a block diagram of a threat warning system, generally referenced 100, constructed and operative in accordance with an embodiment of the disclosed technique. Threat warning system (TWS) 100 includes a sensor unit 102 and a control unit 104. Sensor unit 102 is coupled with control unit 104. Sensor unit 102 includes a sensor module 106 and a processing module 108. Sensor module 106 is coupled with processing module 108. Sensor module 106 includes at least one impact recognition sensor 112 (also referred to herein as a "hit sensor"), a plurality of azimuth sensors 114, a plurality of elevation sensors 116, at least one spectral sensor 118, at least one frequency sensor 120, a plurality of power (intensity) sensors 122, spectral filters 124, and pulse profile filters 126. Hit sensors 112 are coupled with sensors 114, 116, 118, 120, 122. Pulse profile filters 126 are coupled with sensors 112, 114, 116, 118, 120, 122. Processing module 108 includes an analog to digital (A/D) converter 128, a processor 130, and pulse train filters 132. Central control unit 104 includes a memory 134, a processor 136, and a database 138. TWS 100 further includes a user interface 140, which is coupled with central control unit 104.

Each of the components of TWS 100 may be embodied by at least one hardware device, at least one software module, or a combination thereof. Furthermore, each of the components may be integrated within a more general hardware device or software module, or may be embodied by a dedicated hardware device or software module. Processing module 108 is generally embodied by an integrated circuit, such as a field-programmable gate array (FPGA). Sensor unit 102 and control unit 104 may be disposed within a single housing, or alternatively may be situated at separate remote locations and linked to each other via a wireless connection (e.g., in accordance with the ZigBee network protocol). It is appreciated that Figure 1 represents an exemplary configuration of the threat warning system of the disclosed technique, and any of the components of TWS 100 may be disposed or embodied in an alternative manner. For example, at least one of spectral filters 124 may be integrated with at least one of hit sensors 112. It is further noted that some of the components of TWS 100 depicted in Figure 1 may be optional. For example, TWS 100 may alternatively include only a subset of sensors 114, 116, 118, 120, 122.

Hit sensors 112 are operative to detect the presence of an incident laser pulse (or other forms of radiation). Each hit sensor 112 may be associated with a particular threat type or with particular characteristics of the incoming radiation. For example, at least one hit sensor 112 is configured to detect laser rangefinder (LRF) pulses; at least one hit sensor 112 is configured to detect laser target designator (DES) pulses; at least one hit sensor 112 is configured to detect beam-riding (BR) laser guidance pulses; at least one hit sensor 112 is configured to detect projected infrared (IR) radiation; at least one hit sensor 112 is configured to detect continuous wave (CW) pulses; at least one hit sensor 112 is configured to detect larger bandwidth pulses (e.g., 1kHz-100kHz); and at least one hit sensor 112 is configured to detect smaller bandwidth pulses (e.g., 3Hz to 100Hz). The isolation of particular types of input may be realized via an amplifier or filter of the hit detector 112, such as by only passing through radiation with a particular bandwidth. For example, a spectral filter 124 coupled with an LRF hit detector 112 is configured to pass through wavelengths associated with LRF transmissions while blocking out all other wavelengths.

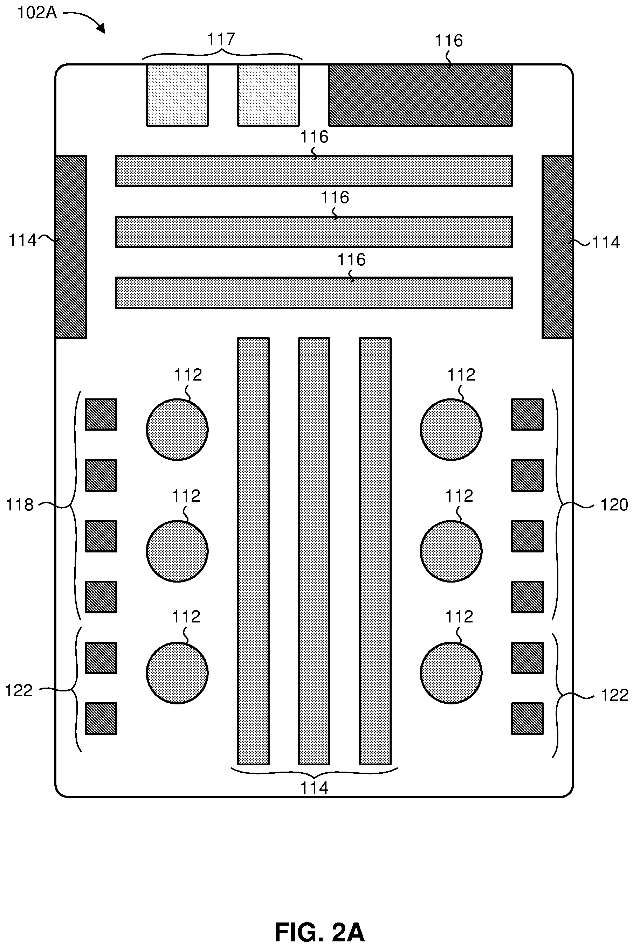

Azimuth sensors 114 are operative to detect the azimuth angle of arrival of the incoming radiation, where each azimuth sensor 114 may be associated with a particular threat type. For example, at least one azimuth sensor 114 is configured to detect LRF pulses, DES pulses and/or IR projections, respectively. Elevation sensors 116 are operative to detect the elevation angle of arrival of the incoming radiation, where each elevation sensor 116 may be associated with a particular threat type. For example, at least one elevation sensor 116 is configured to detect LRF pulses, DES pulses and/or IR projections, respectively. Sensor unit 102 may further include at least one crude elevation sensors 117 (see Figure 2A below), operative for coarse elevation angular detection with a lower accuracy than elevation sensors 116, but which may be sufficient for certain purposes. For example, crude elevation sensors 117 may include three sensors configured to categorize the incoming radiation into up/middle/down elevation ranges. Spectral sensors 118 are operative to detect the bandwidth or spectral range of the incoming radiation. For example each spectral sensor 118 is associated with a particular bandwidth range. Frequency sensors 120 are operative to detect the signal frequency of the incoming radiation (e.g., the pulse frequency). For example each frequency sensor 120 is associated with a particular set of frequencies. Power sensors 122 are operative to detect the power or signal intensity of the incoming radiation. For example each power sensor 122 is associated with a particular power range.

During steady state operation of TWS 100, all of the sensors of sensor module 106 are initially in a "standby mode" with the exception of hit sensors 112. In other words, each of sensors 114, 116, 118, 120, 122 are deactivated, i.e., in an "off state", while only hit sensors 112 remain activated, i.e., in an "on state". As soon as a pulse is detected by at least one hit sensor 112, the other sensors 114, 116, 118, 120, 122 become activated. In particular, the hit sensor 112 triggers the other sensors, such as by "opening" and then "closing" at least a subset of the other sensors 114, 116, 118, 120, 122 upon detection of incoming radiation.

Each of the sensors (114, 116, 118, 120, 122) may be, for example, silicon (Si) based or indium gallium arsenide (InGaAs) based (or extended-InGaAs) sensors. Hit sensors 112 are high sensitivity sensors (e.g., orders of magnitude greater than that of standard CCD or CMOS cameras), and are generally larger in size and operate asynchronously, in contrast to the other sensors of sensor module 106. It is noted that a hit sensor 112 may also determine additional parameters or characteristics of the incident pulse, in addition to detecting its mere presence. For example, a hit sensor 112 may also provide crude frequency or spectral (bandwidth) measurements, which may be sufficient for certain applications (i.e., while spectral sensors 118 and frequency sensors 120 provide more accurate measurements of these respective parameters).

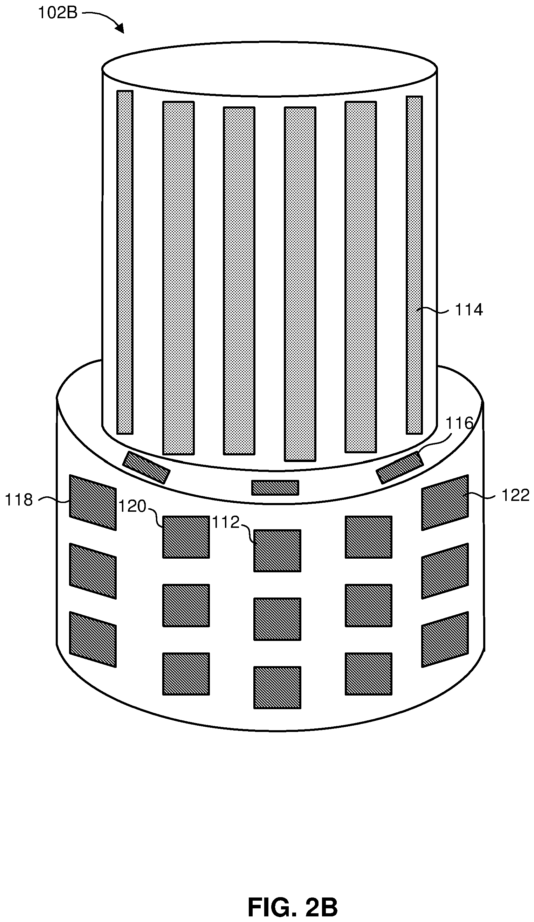

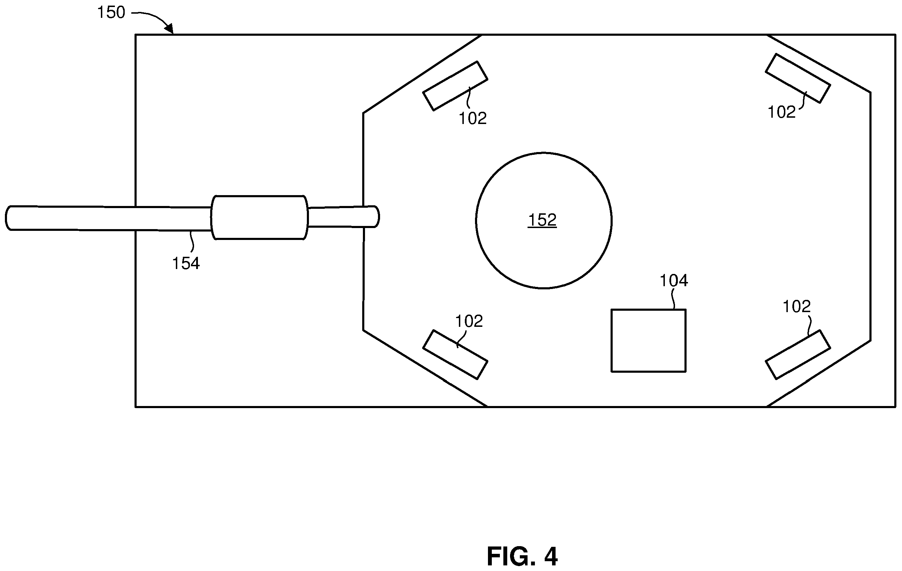

Reference is now made to Figures 2A and 2B. Figure 2A is a front view schematic illustration of an exemplary sensor unit configuration, generally referenced 102A, constructed and operative in accordance with an embodiment of the disclosed technique. Figure 2B is a perspective view schematic illustration of another exemplary sensor unit configuration, generally referenced 102B, constructed and operative in accordance with another embodiment of the disclosed technique. Sensor unit 102A has a rectangular box shape and the sensors (112, 114, 116, 118, 120, 122) are arranged along a substantially planar surface, i.e., such that the detection surfaces lie along a common plane. In contrast, sensor unit 102B is generally cylindrically-shaped and the sensors are arranged along a circular perimeter spanning across an azimuthal plane. Thus, an individual sensor unit 102B is operative to obtain full hemispherical detection coverage (e.g. spanning 360° azimuth), whereas similar full hemispherical detection coverage can be obtained by deploying four separate sensor units 102A spread out, each one providing approximately 90° field of coverage (such as in the sensor unit deployment of Figure 4 discussed hereinbelow). Sensor unit 102B however may not be suitable for deployment in all types of vehicles.

According to an embodiment of the disclosed technique, at least some of the sensors of sensor module 106 are discrete sensors, as opposed to array or matrix sensors. Discrete sensors are basic sensors that provide a binary output, by indicating whether the measured variable is above or below a specified setpoint. Matrix sensors, such as for example a high angular resolution laser irradiance detector (HARLID), are arranged in an array along the individual matrix sensor module. Matrix sensors therefore cover a smaller surface area as compared to discrete sensors, which are spread out across the sensor module and thus provide a larger surface area for detection. Furthermore, a matrix sensor module will cease operating correctly if even a single portion fails or malfunctions, whereas a sensor module with discrete sensors provides redundancy and can maintain operation even when some of the sensors are malfunctioning. An additional distinction is modularity, as individual sensors cannot be replaced in a matrix sensor module (e.g., in order to fix a malfunctioning sensor or to upgrade to an enhanced sensor version) without replacing the entire module, as opposed to a discrete sensor module which allows for the replacement of the individual sensors. Discrete sensor modules are also generally less expensive than a corresponding matrix sensor module.

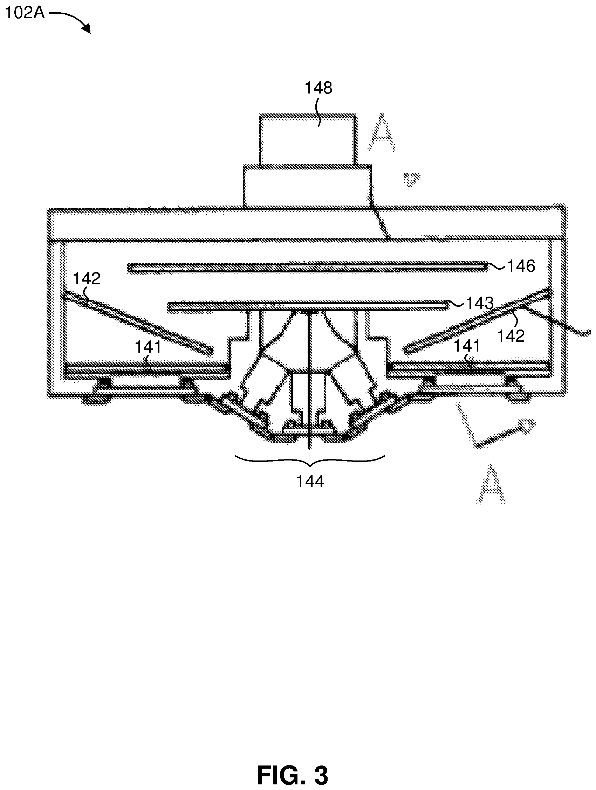

Reference is now made to Figure 3, which is a top view schematic illustration of the sensor unit 102A of Figure 2A. A pair of sensor boards 141 that include hit/frequency/spectral/power sensors are disposed at opposite ends of sensor unit 102A with their detection surfaces facing frontwards. A pair of azimuth sensor boards 142, including BR/IR azimuth sensors, are aligned at an inclination relative to sensor boards 141. Another azimuth sensor board 143 includes LRF/DES azimuth sensors and is disposed at a middle section of sensor unit 102A behind sensor boards 141, 142. Sensor unit 102A further includes an optomechanical mechanism 144 coupled with sensor boards 141, 142 and 143, each of which may be embodied by printed circuit boards (PCB). Sensor unit 102A further includes a processing/communication unit 146, which obtains data from the various sensors, performs initial processing of the data, and organizes the data for subsequent comprehensive processing. Sensor unit 102A further includes a wiring connector 148 for external connection.

The direction determining sensors of sensor module 106 (i.e., azimuth sensors 114 and elevation sensors 116) may be implemented with an encoded mask technique. In particular, an encoded mask having a gray code matrix pattern of opaque and transparent sections is disposed in front of the detector array, the masking pattern arranged such that different incident angles of the incoming radiation results in different detection patterns. The encoding scheme may be based on multiple gray code masks, such as using at least one pair of complementary encoded masks, as described for example in PCT Patent Application Publication No. WO2006/061819 entitled "Complementary Masks".

Reference is now made to Figure 4, which is a top view schematic illustration of an armored military vehicle, generally referenced 150, installed with components of the threat warning system 100 of Figure 1, constructed and operative in accordance with an embodiment of the disclosed technique. Sensor units 102 are arranged along the outer perimeter of military vehicle 150 spaced apart substantially equidistantly, such that the coverage area of all of the sensor modules 106 together encompasses the entire surrounding area (i.e., providing 360° azimuth field of coverage). In an exemplary implementation of the disclosed technique, military vehicle 150 is disposed with four sensor units 102, such that each sensor unit 102 is aligned towards a respective corner of vehicle 150 and receives incoming radiation emanating from that respective direction. The incoming radiation typically propagates to multiple sensor units 102, although may be detected at only one sensor unit 102. Central control unit 104 is situated at a suitable location on the upper region of vehicle 150, such as off to one side near the turret 152. Vehicle 150 further includes an external threat countermeasures unit, which may be partially embodied by main gun 154. Armored military vehicle 150 may be, for example, a battle tank, an armored personnel carrier, an armored jeep, and the like. TWS 100 may alternatively be mounted onto other types of vehicles, such as aircrafts or marine vessels. It is appreciated that TWS 100 is not limited to use with military vehicles or vehicles in general. For example, TWS 100 may alternatively be deployed in a different type of military setting, such as in the vicinity of a guard post or station, or any other suitable structure, whether stationary or mobile. TWS 100 may further alternatively be deployed in a non-military setting, such as at a general structure or location that is intended to be secured or protected. Yet further alternatively, at least one sensor unit 102 of TWS 100 may be held by a person, or otherwise worn by or attached to personal clothing or equipment.

In general, when an enemy military force activates a weapon system that involves a flash event or laser transmission directed toward armored military vehicle 150, at least one sensor module 106 detects the incoming radiation. Sensor module 106 filters out noise and irrelevant radiation sources (e.g., via filters 124, 126), and processing module 108 and/or central control unit 104 processes the detected radiation and associated characteristics and determines if the radiation is a flash event (e.g., a light flash associated with the launching of an explosive projectile) or laser radiation that is actively transmitted by a threat source (e.g., a laser-guided weapon). If the detected radiation is deemed to not be either of these sources, then it may be ignored. If however a threat is positively determined, TWS 100 may proceed to characterize the threat, determine additional information about the threat, and then respond to the threat in a suitable manner.

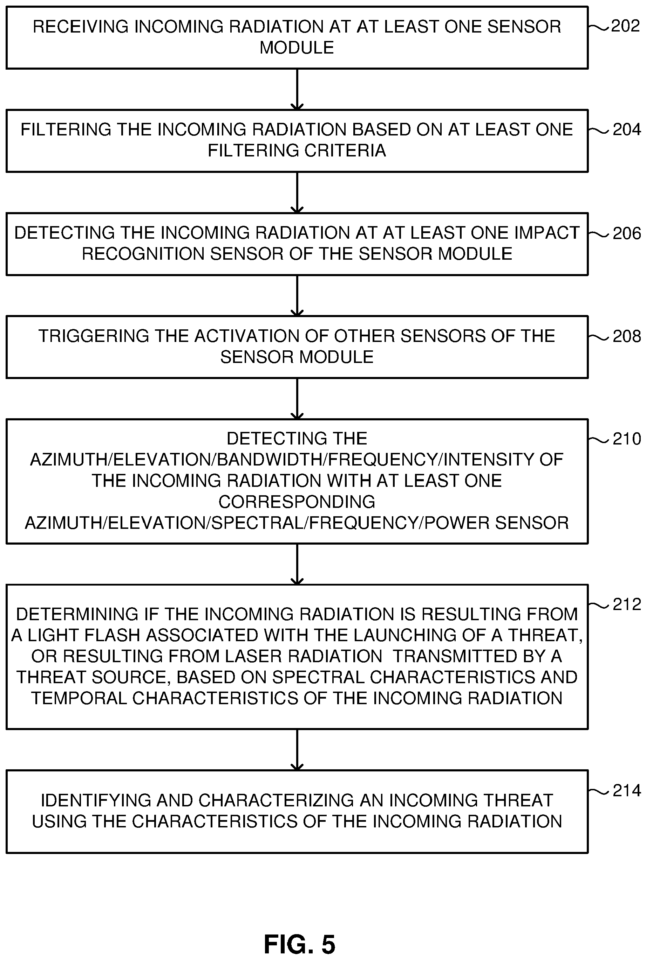

Reference is now made to Figure 5, which is a flow diagram of a method for detecting radiation associated with an incoming threat, operative in accordance with an embodiment of the disclosed technique. In procedure 202, incoming radiation is received at at least one sensor module. Referring to Figures 1 and 4, radiation arrives at a sensor module 106 of at least one sensor unit 102 of TWS 100.

In procedure 204, the incoming radiation is filtered based on at least one filtering criteria. Referring to Figure 1, spectral filters 124 filter out radiation beyond a certain spectral range. For example, spectral filters 124 may be configured to pass wavelengths within approximately 0.3-2.2 µm, encompassing at least a portion of the visible (VIS), near infrared (NIR) and short-wavelength infrared (SWIR) spectral regions, while blocking out wavelengths outside this range.

In procedure 206, the incoming radiation is detected at an impact recognition sensor of at least one of the sensor modules. Referring to Figures 1, 2A and 2B, at least one hit sensor 112 detects and samples an incoming laser pulse or flash radiation. Hit sensors 112 operate in an activated state during steady state operation mode of TWS 100.

In procedure 208, the activation of other sensors of the sensor module is triggered. Referring to Figures 1, 2A and 2B, sensors 114, 116, 118, 120, 122 are deactivated or in an "off state" during steady state operation mode of TWS 100. For each detected laser pulse or flash radiation, hit sensor 112 activates or "turns on" at least a subset of the other sensors 114, 116, 118, 120, 122 for a brief duration (e.g., approximately 10ns). For example, hit sensor 112 may trigger the activation of azimuth sensors 114, elevation sensors 116, spectral sensors 118, and frequency sensors 120. The selection of which sensors to activate may be based on characteristics of the incoming radiation, such that if the detected pulse has certain characteristics then only certain sensors are activated.

In procedure 210, the azimuth/elevation/bandwidth/frequency/intensity of the incoming radiation is detected with at least one corresponding azimuth/elevation/spectral/frequency/power sensor. Referring to Figures 1, 2A and 2B, the data from the activated sensors 114, 116, 118, 120, 122 is sampled to obtain the respective characteristics of the incoming radiation. For example, azimuth sensors 114 detect the azimuth angle of arrival; elevation sensors 116 detect the elevation angle of arrival; spectral sensors 118 detect the bandwidth; frequency sensors 120 detect the signal frequency; and power sensors 122 detect the intensity. The sensors 114, 116, 118, 120, 122 acquire data for the brief interval during which they are in an activated state (triggered by hit sensors 112), which may relate to an individual input pulse or a sequence of input pulses. Subsequently, the input pulses optionally undergoes further filtering via pulse profile filters 126, which are analog filters that filter out noise and attempt to pass through only threat related data. The pulses are then converted into corresponding digital signals via A/D converter 128 and forwarded to processor 130.

In procedure 212, it is determined whether the incoming radiation is resulting from a light flash associated with the launching of a threat or resulting from laser radiation transmitted by a threat source, based on spectral characteristics and temporal characteristics of the incoming radiation. Referring to Figure 1, processor 136 (and/or processor 130) determines a temporal profile and spectral signature of the radiation based on the detected characteristics (e.g., azimuth and elevation angle of arrival, spectral range, frequency, intensity, pulse width, pulse shape), and classifies the radiation accordingly as a flash event or an active laser transmission. In general, active laser transmissions may be characterized by smaller bandwidths (e.g., on the order of nanometers) and shorter durations (e.g., a few nanoseconds), whereas flash events may involve a wider spectral profile (e.g., on the order of micrometers) and longer durations (e.g., tens of milliseconds). It is appreciated that the use of discrete (non-matrix) sensors in particular for both flash event detection and laser detection provides various useful features, such as: spectral mapping, large surface area coverage, sufficiently high sampling rate (e.g., capable of also detecting in the nanosecond range), and the ability to sample a wide range of parameters simultaneously. In addition, discrete sensors have benefits relating to their cost, reliability, design flexibility, and maintenance and repair. TWS 100 may also rely on additional criteria for the classification or for filtering out noise, such as by taking into account relative timing information. For example, if three different sensor modules 106 (i.e., at different sensor units 102) receive incoming radiation substantially concurrently, then it is determined which sensor module 106 detected the radiation first (along with additional information), and then proceed to analyze only the data from the first arrival sensor module 106. It is noted that the analysis of both spectral and temporal characteristics serves to minimize the false alarm rate (FAR) of TWS 100, for example by avoiding false detections of photography flashes, lightning flashes, solar reflections, and the like. It is further noted that the detection channel may differ between flash event detections and active laser transmission detections for a given sensor, in that each sensor feeds data to different amplification circuitry that relate to the different threat detection mechanisms. At least some of the same sensor circuitry may also be used for the detection of both types of events.

In procedure 214, the incoming threat is identified and characterized using the characteristics of the incoming radiation. Referring to Figure 1, processor 136 (and/or optionally processor 130) determines the type of threat and/or other relevant information about the oncoming threat, based on the classification of the incoming radiation as a flash event or laser transmission, as well as the detected radiation characteristics. For example, incoming radiation may be identified as resulting from a laser rangefinder (LRF), a laser target designator (DES), or a beam-riding (BR) laser guidance transmission, if the radiation activated a particular hit detector 112 associated with the respective threat type (e.g., if a specific BR hit detector 112 was activated then the corresponding detection may be deemed a BR transmission). Furthermore, the establishment of the threat type may be performed based on a particular combination of the radiation parameters associated with that threat type (e.g., wavelength, duration, pulse shape, angle of arrival, intensity), even if the radiation activated multiple types of sensors 112, 114, 116, 118, 120, 122. Processor 130 may map the input pulses by generating a signature pattern according to the detected pulse characteristics, and subsequently use the mapping to identify or characterize the associated threat. For example, processor 130 may generated a temporal mapping of each pulse that models characteristics of the pulse as a function of time, such as frequency, amplitude, intensity, modulation, and the like. The temporal pulse mapping may then be compared with a database 138, which includes information associating different types of threats with signal characteristics. If a pulse mapping or a sequence of pulse mappings matches a database threat record to a selected degree (e.g., if a predetermined number of mapping characteristics correspond to the database record characteristics), then the pulse is associated with that particular threat. The database may also include information associating different types of noise or interference signals with pulse characteristics, enabling the identification of such noise or interference. The database may further include supplementary data for each threat record, such as a severity rating for the threat, possible enemy sources, options for response, and the like. An example of a pulse mapping and threat characterization technique is described in PCT Patent Application Publication No. WO2012/093399 entitled "Laser Threat Warning System and Method". Once the threat is identified, TWS 100 may proceed to determine additional real-time information about the threat (e.g., speed, range, location and direction) and to prepare implementation of an appropriate countermeasure. The threat identification and classification may be implemented by at least one dedicated threat classification mechanism, which may be integrated within processing module 108 and/or central control unit 104, instead of or in addition to processors 130, 136. Central control unit 104 may generate detailed log files of operational data (e.g., information about detected radiation, timestamps, types of identified threats, threat profiles, identification accuracy, and the like), allowing for future debriefing and implementing adjustments to TWS 100 as necessary.

The operation of TWS 100 involves relatively low average power consumption, since most of the sensors (114, 116, 118, 120, 122) are frequently in standby mode and deactivated, and only become activated after receiving a trigger from hit sensors 112. For example, a sensor operating full time under full performance (while a threat is being detected) may consume approximately 10W power, whereas in standby mode the power consumption may be orders of magnitude lower, such as approximately 100mW. As a result, TWS 100 may operate for a long time using only batteries. Furthermore, the dual-purpose integrated nature of TWS 100, i.e., the ability to obtain information regarding both a flash event and an active laser transmission by a potential threat, inherently enhances the system reliability and reduces the false alarm rate for the detection of oncoming threats. For example, if both a flash event and an active laser transmission occur substantially simultaneously, then TWS 100 may determine that both are associated with a single threat (e.g., a laser-guided missile that generates a launch flash during the initial portion of its laser transmission). TWS 100 may apply different types of warnings for flash events, for active laser transmissions, and for both events together, and may use information of each type of event to improve the threat analysis, such as to provide an estimation of the current distance of the oncoming threat.

Sensor unit 102 may be manufactured and be provided separately from central control unit 104, which may be realized as a commercial off-the-shelf (COTS) product. The ability to connect sensor unit 102 to central control unit 104 by a wireless channel, allowing these components to be distributed over separate locations, is enabled by the standby mode/sensor triggering and the low power consumption features of the disclosed technique, as well as the relatively small amounts of data transmission involved.

In accordance with another embodiment of the disclosed technique, the discrete sensors of sensor module 106 may be utilized solely for the purposes of flash event detection. Whereas TWS 100 discussed hereinabove is a dual-purpose integrated warning system operative for detecting both flash events and laser transmissions associated with a potential threat, the same components of TWS 100 may be confined to flash event detection only. In particular, such a system would include the same types of discrete sensors, such as impact recognition sensors, spectral sensors, frequency sensors, azimuth sensors, and/or elevation sensors, which are configured to detect different aspects of the received radiation. The detected parameters are then processed to determine whether the radiation is associated with a flash event, in a similar manner as discussed hereinabove.

## Claims

1. A dual threat warning system (100), operative for detecting a flash event of a threat source and further operative for detecting a laser transmission of a threat source, **characterized in that** the system comprises:
at least one sensor module (106), operative to receive incoming radiation, said sensor module (106) comprising discrete sensors comprising:
at least one discrete impact recognition sensor (112), operative to detect the presence of an incident laser pulse of said incoming radiation;
at least one discrete spectral sensor (118), operative to detect if the spectral range of said incoming radiation is above or below a specified setpoint; and
at least one discrete frequency sensor (120), operative to detect if the frequency of said incoming radiation is above or below a specified setpoint;
said sensor module (106) further comprising at least one filter (124, 126), operative for filtering said incoming radiation according to at least one filtering criteria, and
a processor (130), coupled with said sensor module (106), said processor (130) operative for determining, using said discrete sensors, if said incoming radiation is resulting from a flash event comprising of a light flash associated with the launching of a threat, and if said incoming radiation is resulting from an active laser transmission comprising laser radiation transmitted by a threat source, based on spectral characteristics and temporal characteristics of said incoming radiation, whereby a flash event has a duration on the order of milliseconds, whereas an active laser transmissions has a duration on the order of nanoseconds,
wherein said discrete sensors are configured to sample at a sampling rate capable of detection up to a nanosecond range, to enable both flash event detection and active laser transmission detection using said discrete sensors.

2. The system of claim 1, wherein said sensor module (106) further comprises at least one sensor selected from the group consisting of:
a plurality of azimuth angular sensors (114), operative for detecting the azimuth angle of arrival of said incoming radiation;
a plurality of elevation angular sensors (116), operative for detecting the elevation angle of arrival of said incoming radiation; and
a plurality of power sensors (122), operative for detecting the intensity of said incoming radiation.

3. The system of claim 1, wherein said filter comprises a wavelength filter (124), coupled with at least one of said impact recognition sensors (112), said wavelength filter (124) operative for filtering out selected wavelengths of said incoming radiation.

4. The system of claim 1, wherein said sensor module (106, 102B) comprises sensors arranged along a circular perimeter across an azimuthal plane and operative to obtain 360° azimuth detection coverage.

5. The system of claim 1, wherein said impact recognition sensor (112) operates in an activated state during standby system mode and triggers the activation of at least a subset of other sensors of said sensor module upon detection of said incoming radiation.

6. The system of claim 1, wherein said processor (130) is further operative to identify and characterize an incoming threat using the characteristics of said incoming radiation.

7. The system of claim 1, wherein at least one sensor (112, 118, 120) of said sensor module (106) is selected from the list consisting of:
a silicon (Si) sensor;
an indium gallium arsenide (InGaAs) sensor; and
an extended-lnGaAs sensor.

8. The system of claim 1, wherein at least one sensor (112, 118, 120) of said sensor module (106) comprises multiple encoded masks with a gray code matrix pattern.

9. The system of claim 1, wherein said sensor module (106) is comprised in a sensor unit (102), and said processor (130) is comprised in a control unit (104) situated at a separate location from said sensor unit (102), said control unit (104) being wirelessly coupled with said sensor unit (102).

10. The system of claim 1, wherein at least a portion of said system (100) is installed on a structure selected from the list consisting of:
a vehicle;
an armored military vehicle (150);
an aircraft;
a marine vessel;
a guard post;
a mobile platform; and
a stationary platform.

11. The system of claim 1, comprising different detection channels between flash event detections and active laser transmission detections for a given sensor, in that each sensor feeds data to different amplification circuitry that relate to different threat detection mechanisms.

12. A dual threat warning method, for detecting a flash event of a threat source and for detecting a laser transmission of a threat source, **characterized in that** the method comprises the procedures of:
receiving (202) incoming radiation at at least one sensor module comprising discrete sensors;
filtering (204) said incoming radiation according to at least one filtering criteria;
detecting (206) the filtered incoming radiation at at least one discrete impact recognition sensor of said sensor module;
detecting (210) if the spectral range of said incoming radiation is above or below a specified setpoint, with at least one discrete spectral sensor of said sensor modules;
detecting (210) if the frequency of said incoming radiation is above or below a specified setpoint, with at least one discrete frequency sensor of said sensor modules;
determining (212), using said discrete sensors, if said incoming radiation is resulting from a flash event comprising a light flash associated with the launching of a threat, and if said incoming radiation is resulting from an active laser transmission comprising a laser radiation transmitted by a threat source, based on spectral characteristics and temporal characteristics of said incoming radiation, whereby a flash event has a duration on the order of milliseconds, whereas an active laser transmissions has a duration on the order of nanoseconds,
wherein said discrete sensors are configured to sample at a sampling rate capable of detection up to a nanosecond range, to enable both flash event detection and active laser transmission detection using said discrete sensors.

13. The method of claim 12, further comprising the procedure of triggering (208) the activation of at least a subset of other sensors of said sensor module upon detection of said incoming radiation.

14. The method of claim 12, further comprising the procedure of determining at least one other parameter of said incoming radiation selected from the list consisting of:
azimuth angle of arrival, with a plurality of azimuth sensors;
elevation angle of arrival, with a plurality of elevation sensors; and
intensity, with a plurality of power sensors.

15. The method of claim 12, wherein said filtering criteria comprises wavelength filtering.

16. The method of claim 12, further comprising the procedure of identifying and characterizing (214) an incoming threat using the characteristics of said incoming radiation.

17. The method of claim 12, wherein said incoming radiation is routed through different detection channels between flash event detections and active laser transmission detections for a given sensor, in that each sensor feeds data to different amplification circuitry that relate to different threat detection mechanisms.

## Patentansprüche

1. System (100) zur zweifachen Warnung vor einer Bedrohung, das dazu fähig ist, ein Lichtblitzereignis einer Bedrohungsquelle zu erkennen, und ferner dazu fähig ist, eine Laserlichtübertragung einer Bedrohungsquelle zu erkennen, **dadurch gekennzeichnet, dass** das System umfasst:
wenigstens ein Sensormodul (106), das dazu fähig ist, ankommende Strahlung aufzunehmen, wobei das Sensormodul (106) einzelne Sensoren umfasst:
wenigstens einen einzelnen Einwirkungserkennungssensor (112), der dazu fähig ist, das Vorhandensein eines eintreffenden Laserimpulses der ankommenden Strahlung zu erfassen,
wenigstens einen einzelnen Spektralsensor (118), der dazu fähig ist, zu erfassen, ob der Spektralbereich der ankommenden Strahlung über oder unter einem vorgegebenen Nennwert liegt, und
wenigstens einen einzelnen Frequenzsensor (120), der dazu fähig ist, zu erfassen, ob die Frequenz der ankommenden Strahlung über oder unter einem vorgegebenen Nennwert liegt,
wobei das Sensormodul (106) ferner wenigstens einen Filter (124, 126) umfasst, der dazu fähig ist, die ankommende Strahlung entsprechend wenigstens einem Filterkriterium zu filtern, und
einen Prozessor (130), der mit dem Sensormodul (106) gekoppelt ist, wobei der Prozessor (130) dazu fähig ist, unter Verwendung der einzelnen Sensoren zu bestimmen, ob die ankommende Strahlung von einem Lichtblitzereignis herrührt, das das einen mit dem Einleiten einer Bedrohung verbundenen Lichtblitz umfasst, und ob die ankommende Strahlung von einer aktiven Laserlichtübertragung herrührt, die von einer Bedrohungsquelle übertragene Laserstrahlung umfasst, basierend auf spektralen Eigenschaften und zeitlichen Eigenschaften der ankommenden Strahlung, wobei ein Lichtblitzereignis eine Dauer in der Größenordnung von Millisekunden aufweist, wohingegen eine aktive Laserlichtübertragung eine Dauer in der Größenordnung von Nanosekunden aufweist,
wobei die einzelnen Sensoren dazu beschaffen sind, mit einer Abtastgeschwindigkeit abzutasten, die tauglich ist, bis zu einem Nanosekundenbereich zu erfassen, um sowohl eine Lichtblitzereigniserfassung als auch eine aktive Laserlichtübertragungserfassung unter Verwendung der einzelnen Sensoren zu ermöglichen.

2. System nach Anspruch 1, wobei das Sensormodul (106) ferner wenigstens einen Sensor umfasst, der aus der Gruppe ausgewählt ist, bestehend aus:
eine Vielzahl von Azimutwinkelsensoren (114), die dazu fähig sind, den Azimutwinkel des Eintreffens der ankommenden Strahlung zu erfassen,
eine Vielzahl von Elevationswinkelsensoren (116), die dazu fähig sind, den Elevationswinkel des Eintreffens der ankommenden Strahlung zu erfassen, und
eine Vielzahl von Leistungssensoren (122), die dazu fähig sind, die Intensität der ankommenden Strahlung zu erfassen.

3. System nach Anspruch 1, wobei der Filter eine Wellenlängenfilter (124) umfasst, der mit wenigstens einem der Einwirkungserkennungssensoren (112) gekoppelt ist, wobei der Wellenlängenfilter (124) dazu fähig ist, ausgewählte Wellenlängen der ankommenden Strahlung auszufiltern.

4. System nach Anspruch 1, wobei das Sensormodul (106, 102B) Sensoren umfasst, die entlang einem Kreisumfang über eine azimutale Ebene angeordnet sind und dazu fähig sind, eine Azimuterfassungsabdeckung von 360° zu erreichen.

5. System nach Anspruch 1, wobei der Einwirkungserkennungssensor (112) während eines Bereitschaftssystemmodus in einem aktivierten Zustand arbeitet und bei Erfassung der ankommenden Strahlung die Aktivierung wenigstens eines Teilsatzes der anderen Sensoren des Sensormoduls auslöst.

6. System nach Anspruch 1, wobei der Prozessor (130) ferner dazu fähig ist, eine ankommende Bedrohung unter Verwendung der Eigenschaften der ankommenden Strahlung zu identifizieren und zu charakterisieren.

7. System nach Anspruch 1, wobei wenigstens ein Sensor (112, 118, 120) des Sensormoduls (106) aus der Aufzählung ausgewählt ist, bestehend aus:
einem Siliziumsensor (Si-Sensor),
einem Indiumgalliumarsenidsensor (InGaAs-Sensor) und
einem Extended-InGaAs-Sensor.

8. System nach Anspruch 1, wobei wenigstens ein Sensor (112, 118, 120) des Sensormoduls (106) mehrfach kodierte Masken mit einer Gray-Code-Matrixstruktur umfasst.

9. System nach Anspruch 1, wobei das Sensormodul (106) in einer Sensoreinheit (102) enthalten ist und der Prozessor (130) in einer Steuereinheit (104) enthalten ist, die an einer von der Sensoreinheit (102) separaten Stelle angeordnet ist, wobei die Steuereinheit (104) drahtlos mit der Sensoreinheit (102) gekoppelt ist.

10. System nach Anspruch 1, wobei wenigstens ein Teil des Systems (100) auf einer Struktur installiert ist, die aus der Aufzählung ausgewählt ist, bestehend aus:
einem Fahrzeug,
einem bewaffneten Militärfahrzeug (150),
einem Flugzeug,
einem Schiff,
einer Leuchtsäule,
einer mobilen Plattform und
einer stationären Plattform.

11. System nach Anspruch 1, umfassend verschiedene Erfassungskanäle zwischen Lichtblitzereigniserfassungen und aktiven Laserlichtübertragungserfassungen für einen gegebenen Sensor, in denen jeder Sensor Daten an unterschiedliche Verstärkerschaltungen einspeist, die unterschiedliche Bedrohungserfassungsmechanismen betreffen.

12. Verfahren zur zweifachen Warnung vor einer Bedrohung, zum Erfassen eines Lichtblitzereignis einer Bedrohungsquelle zum Erfassen einer Laserlichtübertragung einer Bedrohungsquelle, **dadurch gekennzeichnet, dass** das Verfahren die folgenden Abläufe umfasst:
Aufnehmen (202) ankommender Strahlung an wenigstens einem Sensormodul, das einzelne Sensoren umfasst,
Filtern (204) der ankommenden Strahlung entsprechend wenigstens einem Filterkriterium,
Erfassen (206) der gefilterten ankommenden Strahlung an wenigstens einen einzelnen Einwirkungserkennungssensor des Sensormoduls,
Erfassen (210), ob der Spektralbereich der ankommenden Strahlung über oder unter einem vorgegebenen Nennwert liegt, mit wenigstens einem einzelnen Spektralsensor,
Erfassen (210), ob die Frequenz der ankommenden Strahlung über oder unter einem vorgegebenen Nennwert liegt, mit wenigstens einem einzelnen Frequenzsensor,
Bestimmen (212), unter Verwendung der einzelnen Sensoren, ob die ankommende Strahlung von einem Lichtblitzereignis herrührt, das das einen mit dem Einleiten einer Bedrohung verbundenen Lichtblitz umfasst, und ob die ankommende Strahlung von einer aktiven Laserlichtübertragung herrührt, die von einer Bedrohungsquelle übertragene Laserstrahlung umfasst, basierend auf spektralen Eigenschaften und zeitlichen Eigenschaften der ankommenden Strahlung, wobei ein Lichtblitzereignis eine Dauer in der Größenordnung von Millisekunden aufweist, wohingegen eine aktive Laserlichtübertragung eine Dauer in der Größenordnung von Nanosekunden aufweist,
wobei die einzelnen Sensoren dazu beschaffen sind, mit einer Abtastgeschwindigkeit abzutasten, die tauglich ist, bis zu einem Nanosekundenbereich zu erfassen, um sowohl eine Lichtblitzereigniserfassung als auch eine aktive Laserlichtübertragungserfassung unter Verwendung der einzelnen Sensoren zu ermöglichen.

13. Verfahren nach Anspruch 12, ferner umfassend den Vorgang des Auslösens (208) der Aktivierung wenigstens eines Teilsatzes der anderen Sensoren des Sensormoduls bei Erfassung der ankommenden Strahlung.

14. Verfahren nach Anspruch 12, ferner umfassend den Vorgang des Bestimmens wenigstens eines anderen Parameters der ankommenden Strahlung, ausgewählt aus der Aufzählung, bestehend aus:
Azimutwinkel des Eintreffens mit einer Vielzahl von Azimutwinkelsensoren
Elevationswinkel des Eintreffens mit einer Vielzahl von Elevationswinkelsensoren und
Intensität mit einer Vielzahl von Leistungssensoren.

15. Verfahren nach Anspruch 12, wobei das Filterkriterium Wellenlängenfilterung umfasst.

16. Verfahren nach Anspruch 12, ferner umfassend den Vorgang des Identifizierens und Charakterisierens (214) eine ankommende Bedrohung unter Verwendung der Eigenschaften der ankommenden Strahlung.

17. Verfahren nach Anspruch 12, wobei die ankommende Strahlung durch verschiedene Erfassungskanäle zwischen Lichtblitzereigniserfassungen und aktiven Laserlichtübertragungserfassungen für einen gegebenen Sensor geführt wird, in denen jeder Sensor Daten an unterschiedliche Verstärkerschaltungen einspeist, die unterschiedliche Bedrohungserfassungsmechanismen betreffen.

## Revendications

1. Système d'avertissement de double menace (100), opérationnel pour détecter un événement flash d'une source de menace et en outre opérationnel pour détecter une transmission laser d'une source de menace, **caractérisé en ce que** le système comprend :
au moins un module de capteurs (106), opérationnel pour recevoir un rayonnement entrant, ledit module de capteurs (106) comprenant des capteurs discrets comprenant : au moins un capteur discret de reconnaissance d'impact (112), opérationnel pour détecter la présence d'une impulsion laser incidente dudit rayonnement entrant ;
au moins un capteur spectral discret (118), opérationnel pour détecter si
la plage spectrale dudit rayonnement entrant est au-dessus ou en dessous d'un point de consigne spécifié ; et
au moins un capteur de fréquence discret (120), fonctionnant pour détecter si la fréquence dudit rayonnement entrant est supérieure ou inférieure à un point de consigne spécifié ;
ledit module de capteur (106) comprenant en outre au moins un filtre (124, 126), fonctionnant pour filtrer ledit rayonnement entrant selon au moins un critère de filtrage, et
un processeur (130), couplé audit module de capteurs (106), ledit processeur (130) fonctionnant pour déterminer, en utilisant lesdits capteurs discrets, si ledit rayonnement entrant est le résultat d'un événement flash comprenant un flash lumineux associé au lancement d'une menace, et si ledit rayonnement entrant est le résultat d'une transmission laser active comprenant un rayonnement laser transmis par une source de menace, sur la base de caractéristiques spectrales et de caractéristiques temporelles dudit rayonnement entrant, moyennant quoi un événement flash a une durée de l'ordre de la milliseconde, alors qu'une transmission de laser active a une durée de l'ordre de la nanoseconde,
dans lequel lesdits capteurs discrets sont configurés pour échantillonner à une fréquence d'échantillonnage capable de détecter jusqu'à une plage de nanosecondes, pour permettre à la fois la détection d'événements flash et la détection d'une transmission laser active en utilisant lesdits capteurs discrets.

2. Système selon la revendication 1, dans lequel ledit module de capteurs (106) comprend en outre au moins un capteur choisi dans le groupe constitué de :
une pluralité de capteurs angulaires d'azimut (114), fonctionnant pour détecter le l'angle azimutal d'arrivée dudit rayonnement entrant ;
une pluralité de capteurs angulaires d'élévation (116), fonctionnant pour détecter l'angle d'élévation d'arrivée dudit rayonnement entrant ; et
une pluralité de capteurs de puissance (122), fonctionnant pour détecter l'intensité dudit rayonnement entrant.

3. Système selon la revendication 1, dans lequel ledit filtre comprend un filtre de longueur d'onde (124), couplé à au moins un desdits capteurs de reconnaissance d'impact (112), ledit filtre de longueur d'onde (124) fonctionnant pour filtrer des longueurs d'onde sélectionnées dudit rayonnement entrant.

4. Système selon la revendication 1, dans lequel ledit module de capteurs (106, 102B) comprend des capteurs disposés le long d'un périmètre circulaire à travers un plan azimutal et fonctionnant pour obtenir une couverture de détection d'azimut à 360 °.

5. Système selon la revendication 1, dans lequel ledit capteur de reconnaissance d'impact (112) fonctionne dans un état activé pendant le mode système de veille et déclenche l'activation d'au moins un sous-ensemble d'autres capteurs dudit module de capteurs lors de la détection dudit rayonnement entrant.

6. Système selon la revendication 1, dans lequel ledit processeur (130) est en outre opérationnel pour identifier et caractériser une menace entrante en utilisant les caractéristiques dudit rayonnement entrant.

7. Système selon la revendication 1, dans lequel au moins un capteur (112, 118, 120) dudit module de capteurs (106) est sélectionné dans la liste composée de :
un capteur de silicium (Si) ;
un capteur d'arséniure d'indium et de gallium (InGaAs) ; et
un capteur InGaAs étendu.

8. Système selon la revendication 1, dans lequel au moins un capteur (112, 118, 120) dudit module de capteurs (106) comprend plusieurs masques codés selon un motif de matrice de code Gray.

9. Système selon la revendication 1, dans lequel ledit module de capteurs (106) est compris dans une unité de capteurs (102), et ledit processeur (130) est compris dans une unité de commande (104) située à un emplacement séparé de ladite unité de capteurs (102), ladite unité de commande (104) étant couplée sans fil avec ladite unité de capteurs (102).

10. Système selon la revendication 1, dans lequel au moins une partie dudit système (100) est installée sur une structure sélectionnée dans la liste composée de :
un véhicule ;
un véhicule militaire blindé (150) ;
un aéronef ;
un bâtiment de mer ;
un poste de garde ;
une plate-forme mobile ; et
une plate-forme stationnaire

11. Système selon la revendication 1, comprenant différents canaux de détection entre les détections d'événements flash et les détections de transmissions laser actives pour un capteur donné, en ce que chaque capteur transmet des données à différents circuits d'amplification qui se rapportent à différents mécanismes de détection de menace.

12. Procédé d'avertissement de double menace, pour détecter un événement flash d'une source de menace et pour détecter une transmission laser d'une source de menace, **caractérisé en ce que** le procédé comprend les procédures de :
réception (202) d'un rayonnement entrant sur au moins un module de capteurs comprenant des capteurs discrets ;
filtrage (204) dudit rayonnement entrant selon au moins un critère de filtrage ;
détection (206) du rayonnement entrant filtré par au moins un capteur de reconnaissance d'impact discret dudit module de capteurs ;
détection (210) pour savoir si la plage spectrale dudit rayonnement entrant est au-dessus ou en dessous d'un point de consigne spécifié, avec au moins un capteur spectral discret desdits modules de capteurs ;
détection (210) pour savoir si la fréquence dudit rayonnement entrant est supérieure ou inférieure à un point de consigne spécifié, avec au moins un capteur de fréquence discret dudit module de capteurs ;
détermination (212), à l'aide desdits capteurs discrets, si ledit rayonnement entrant est le résultat d'un événement flash comprenant un flash lumineux associé au lancement d'une menace, et si ledit rayonnement entrant est le résultat d'une transmission laser active comprenant un rayonnement laser transmis par une source de menace, en se basant sur les caractéristiques spectrales et temporelles dudit rayonnement entrant, selon lesquelles un événement flash a une durée de l'ordre de la milliseconde, tandis qu'une transmission laser active a une durée de l'ordre de la nanoseconde,
dans lequel lesdits capteurs discrets sont configurés pour échantillonner dans une plage d'échantillonnage capable de détecter jusqu'à une plage de nanosecondes, pour permettre à la fois la détection d'événements flash et la détection de transmissions laser actives en utilisant lesdits capteurs discrets.

13. Procédé selon la revendication 12, comprenant en outre la procédure de déclenchement (208) de l'activation d'au moins un sous-ensemble d'autres capteurs dudit module de capteurs lors de la détection dudit rayonnement entrant.

14. Procédé selon la revendication 12, comprenant en outre la procédure de détermination d'au moins un autre paramètre dudit rayonnement entrant sélectionné dans la liste comprenant
l'angle azimutal d'arrivée, avec une pluralité de capteurs azimutaux ;
l'angle d'élévation d'arrivée, avec une pluralité de capteurs d'élévation ; et
l'intensité, avec une pluralité de capteurs de puissance.

15. Procédé selon la revendication 12, dans lequel ledit critère de filtrage comprend un filtrage de longueur d'onde.

16. Procédé selon la revendication 12, comprenant en outre la procédure d'identification et de caractérisation (214) d'une menace entrante en utilisant les caractéristiques dudit rayonnement entrant.

17. Procédé selon la revendication 12, dans lequel ledit rayonnement entrant est acheminé à travers différents canaux de détection entre les détections d'événement flash et les détections de transmissions laser actives pour un capteur donné, en ce que chaque capteur transmet des données à différents circuits d'amplification qui se rapportent à différents mécanismes de détection de menace.
